Europäisches Patentamt

(19) European Patent Office    (11) Publication number: **0 330 228**

Office européen des brevets    **A2**

(12) **EUROPEAN PATENT APPLICATION**

(21) Application number: 89103299.7    (51) Int. Cl.⁴: **B29C 71/00** , **B29C 53/04** , **B29C 53/06**

(22) Date of filing: 24.02.89

(30) Priority: 25.02.88 JP 43146/88
25.08.88 JP 211350/88

(43) Date of publication of application:
**30.08.89 Bulletin 89/35**

(84) Designated Contracting States:
**DE FR GB IT**

(71) Applicant: **MITSUBISHI PLASTICS INDUSTRIES LIMITED**
**5-2, Marunouchi 2-chome**
**Chiyoda-ku Tokyo(JP)**

(72) Inventor: **Hashimoto, Tadashi Mitsubishi Plastics Ind. Ltd.**
**Nagahama Kojo, 5-8 Mitsuya-cho**
**Nagahama-shi Shiga-ken(JP)**

(74) Representative: **Wächtershäuser, Günter, Dr.**
**Tal 29**
**D-8000 München 2(DE)**

(54) **Method for folding a plastic sheet.**

(57) A method for folding a plastic sheet, which comprises folding a plastic sheet and heat-treating the folded portion of the plastic sheet by heating the folded portion by ultrasonic vibration, followed by cooling.

EP 0 330 228 A2

## METHOD FOR FOLDING A PLASTIC SHEET

The present invention relates to a method for folding a plastic sheet, and a process for producing a shutter for a disc cassette, wherein such a method is employed.

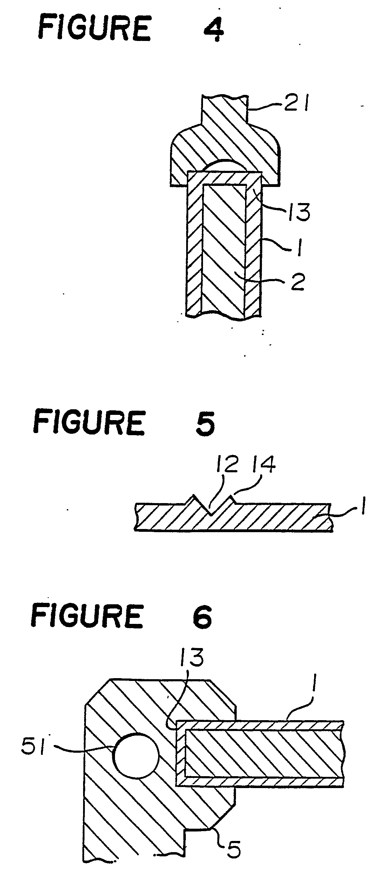

A conventional method for folding a plastic sheet is illustrated in Figure 6. As shown in cross section in Figure 6, it used to be common that a heating plate 5 provided with an electric heater 51 is placed against the folded portion 13 of the plastic sheet 1 to heat the folded portion, and after removing the heating plate, the folded portion is cooled to fix the folded shape (US Patent 4,294,640).

According to such a conventional method for folding a plastic sheet, it is difficult to fold the sheet with high precision, since the heating plate itself tends to undergo a heat deformation or other folding jigs are likely to be deformed upon receiving a heat from the heating plate. The folding precision can be raised by lowering the temperature of the heating plate or conducting the folding operation while blowing air for cooling. However, the operational speed will thereby be extremely slow. Further, when the folding operation is conducted in a plurality of steps, there has been a problem that the heat in the subsequent step affects the portion folded in the preceding step to reduce the precision.

It is an object of the present invention to provide a method for folding a plastic sheet with high precision and at a high speed by heat-treating the folded portion of the plastic sheet by ultrasonic vibration.

The present invention provides a method for folding a plastic sheet, which comprises folding a plastic sheet and heat-treating the folded portion of the plastic sheet by heating the folded portion by ultrasonic vibration, followed by cooling.

Now. the present invention will be described in detail with reference to the preferred embodiments.

In the accompanying drawings:

Figure 1 is a perspective view of an apparatus used for carrying out the method for folding a plastic sheet according to the present invention.

Figure 2 is an enlarged cross-sectional view of a portion covering the folding grooves of the plastic sheet to be folded.

Figure 3 is a cross-sectional view illustrating the state where an ultrasonic vibration horn is pressed against the folded portion.

Figure 4 is a cross-sectional view illustrating another embodiment similar to Figure 3.

Figure 5 is an enlarged cross-sectional view illustrating another embodiment of the folding groove portion.

Figure 6 is a cross-sectional view illustrating a conventional apparatus.

Figure 7 is a front view of a shutter for a disc cassette according to the present invention.

Figure 8 is a side elevation of Figure 7.

Figure 9 is an unfolded view thereof.

Figure 10 is a cross-sectional view illustrating an apparatus for producing the shutter.

Figure 11 is a front view of a disc cassette wherein the shutter of the present invention is used.

It is particularly effective from the viewpoint of the folding precision that a folding groove having e.g. a letter V-shaped cross section is preliminarily provided on the plastic sheet along the line to be folded, the plastic sheet is folded along the folding groove, and the folded portion is heated at a temperature of at least the softening point of the plastic sheet for from 0.05 to 3 seconds.

As the plastic sheet 1, a hard sheet of e.g. polyvinyl chloride, polypropylene, polycarbonate or polyethyleneterephthalate, may be used. The thickness is usually from 0.1 to 1.0 mm.

Any strain formed by the folding operation will be readily reduced by the heat treatment by heating the folded portion of the plastic sheet by ultrasonic vibration, followed by cooling, as mentioned above, whereby a so-called spring back phenomenon where the folded portion tends to return to the initial angle by the resiliency of the plastic sheet, is prevented, and accurate folding can be accomplished.

Further, by preliminarily providing a folding groove 12, the folding operation can readily and accurately be conducted along the groove, and the folded portion can be made free from strain at a high speed by heating the folded portion at a temperature of at least the softening point of the plastic sheet for an extremely short period of time at a level of from 0.05 to 3 seconds.

In a case where a plastic sheet was pressed at a low temperature to form a folding groove 12, the groove 12 regains the initial shape by this heat treatment, whereby the thickness will be restored, and the strength will be improved.

Further, even in a case where the folding groove 12 has been formed by cutting, injection molding or high temperature pressing in such a manner that the initial shape can hardly be restored by heat, the abutting walls of the folding groove 12 fuse to each other integrally by the heat treatment at a temperature of at least the melting point, whereby the folding portion will be reinforced, and the shape fixing will be ensured.

In a case where a folded groove is formed by e.g. injection molding, it is preferred to provide protrusions 14 along both sides of the folding groove 12, so that the protrusions 14 fuse to each other by the heat treatment, whereby the reinforcing effects will be enhanced.

Now, the present invention will be described in detail with reference to a specific embodiment. However, it should be understood that the present invention is by no means restricted by such a specific embodiment.

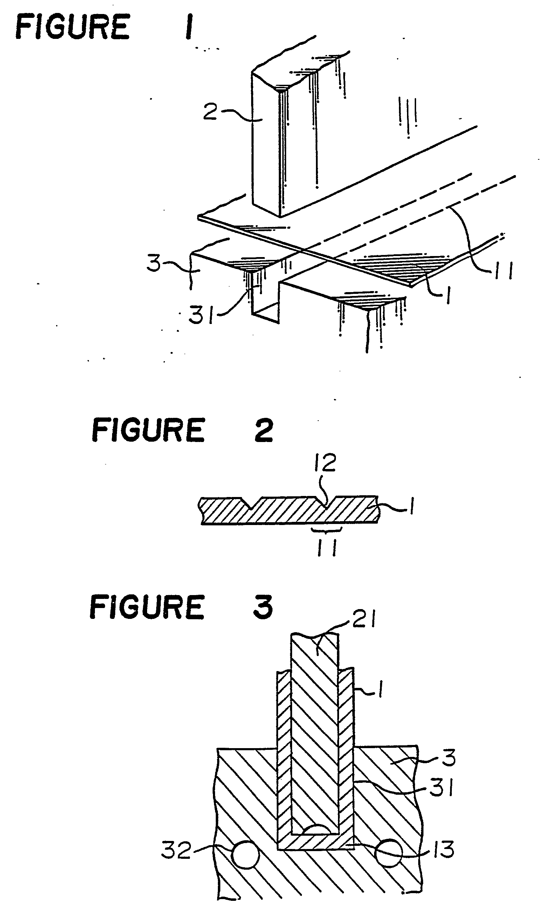

Referring to Figure 1, to carry out the method for folding a plastic sheet according to the present invention, a female die 3 having a recess 31 corresponding to the shape into which the plastic sheet is to be folded and a male die 2 having a shape corresponding substantially to the male die and designed to fit in the female die 3 to press the plastic sheet 1, are prepared. Firstly, the plastic sheet 1 is cold-pressed (at 20°C) along a folding line 11 by a die blade having a nose angle of 90°, to form a folding groove 12, as shown in Figure 2. Then, as shown in Figure 1, the plastic sheet is placed on the female die 3 and cold-pressed by the male die 2, whereby the plastic sheet is accurately folded along the peak of letter V of the folding groove 12. As the plastic sheet 1, a hard polyvinyl chloride sheet having a thickness of 0.3 mm is used, and the groove 12 is formed in a depth corresponding to one half of the thickness.

Then, the male die 2 is removed, and as shown in Figure 3, an ultrasonic vibration horn 21 is fit in the recess 31 of the female die with the plastic sheet located inbetween. Then, ultrasonic vibration is applied to the ultrasonic vibration horn 21, whereby the folded portion 13 is heated to a high temperature of at least the softening temperature in an extremely short period of time at a level of 0.1 second by the frictional heat due to the ultrasonic energy. Thus, the folded portion 13 is softened, and as shown in Figure 3, the preliminarily formed groove 12 becomes shallow, i.e. the folded portion 13 regains the thickness and is reinforced. When the ultrasonic vibration is stopped, the folded portion 13 is quickly cooled to the temperature of the male die and the ultrasonic vibration horn itself, whereby the folded shape is fixed.

Here, a cooling pipe 32 may be provided for the female die 3, or the ultrasonic vibration horn 21 may be cooled with air to fascilitate the cooling. Further, the ultrasonic vibration horn 21 may be used as the male die 2. Further, as shown in Figure 3, an unnecessary portion of the forward end of the ultrasonic horn 21 (or the recess 31 of the female die) may be removed so that the folded portion 13 can be heated locally, to fascilitate the heating by the ultrasonic vibration.

Further, it is also possible that a plastic sheet is folded along the male die, and the female die is used as the ultrasonic vibration horn for heat treatment.

Furthermore, as shown in Figure 4, a folded plastic sheet may be held on a male die 2, so that an ultrasonic vibration horn 21 is pressed against it from outside the folded portion 13, and heating is conducted by the ultrasonic vibration, and the ultrasoic vibration is then stopped for cooling.

The ultrasonic vibration is usually conducted for from 0.05 to 3 seconds at a frequency of from 20 to 40 KHz with a vibrational amplitude of from 5 to 70 $\mu$m under a pressing pressure of from 0.1 to 50 kg/mm². When the plastic sheet is of a hard material, the pressing pressure should preferably be increased accordingly.

According to the method for folding a plastic sheet of the present invention, the plastic sheet is folded, and the folded portion is heat-treated so that the portion is heated and then cooled, whereby the folding can be accurately accomplished without restoration of the angle of the folded portion by the resiliency of the plastic sheet. Further, only the folded portion is swiftly heated by the ultrasonic vibration and swiftly cooled upon the termination of the ultrasonic vibration, whereby there will be no heat conduction except for the folded portion. Further, the heated portion can quickly be cooled and solidified, whereby the folding can be accurately conducted at a high speed, and there will be no adverse affect to other portion of the plastic sheet.

The ultrasonic vibration horn or the male die itself is not heated so much, whereby there will be no heat deformation, and the folding precision can accurately be maintained. There will be no such problem that the plastic sheet fuses and adheres.

Further, a folding groove is preliminarily formed on the plstic sheet along the line to be folded, and the plastic sheet is folded along the folding groove, and thereafter folded portion is heated at a temperature of at least the softening point of the plastic sheet for from 0.05 to 3 seconds, whereby accurate folding can be ensured by the folding groove, and the folding groove is restored in its shape in the folded state and if heated to a temperature of at least the melting point, the walls of the groove fuse to each other so that the shape fixing is ensured.

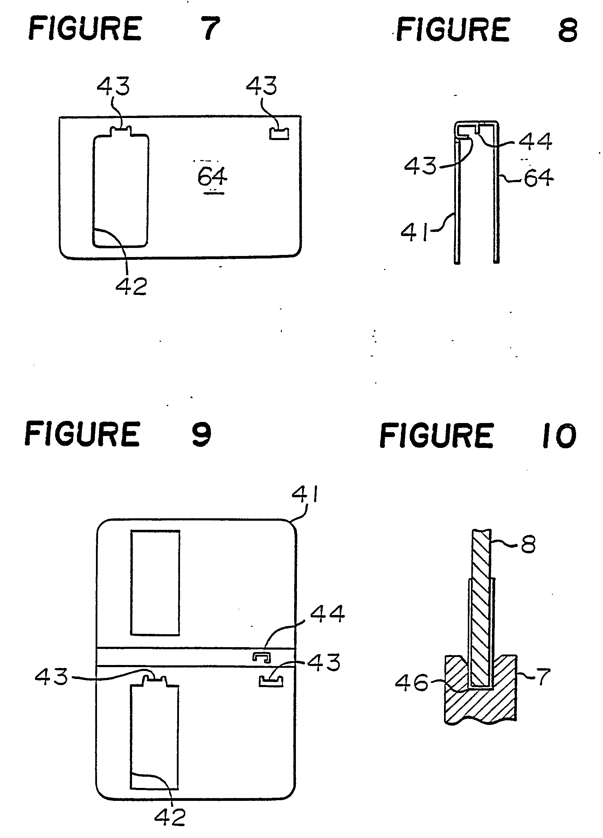

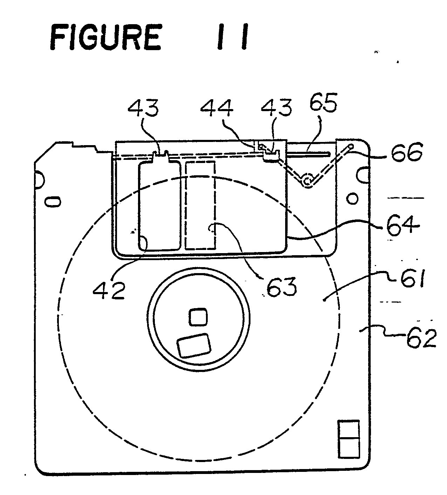

Now, a process for producing a shutter for a disc cassette of the present invention will be described with reference to Figures 7 to 11.

Figure 11 shows the front view of a disc cassette wherein a recording disc is accomodated so that it is driven for rotation from outside and capable of recording and reproducing information. As shown in Figure 11, the disc cassette comprises a plastic shell 62 internally accomodating a magnetic disc 61 and provided with an opening 63 for insertion of a magnetic head for recording and reproduction, and a shutter 64 formed by folding a metal plate and slidably attached for opening and closing the opening 63 for insertion of the magnetic head.

However, the conventional shutters for disc cassettes are made of a rigid and hard metal and accordingly have the following problems. Namely, as the shutter is slidably moved, the metal shutter and the plastic shell 62 constituting the disc cassette frictionally engage with each other, whereby the plastic shell surface is scraped, and the plastic powder resulting from the scraping will enter into the magnetic head access opening and is likely to cause errors in the data recorded on the magnetic disc, or the magnetic disc is thereby damaged so that recording or reproduction can no longer properly be conducted.

If the folding angle of the shutter is small, the shell 62 will be strongly pinched by the shutter, whereby the above problems will be furthered. If the folding angle is large, there will be a problem when the disc cassette is to be set in a drive apparatus. Thus, the precision is required, and once deformed, the deformation remains permanently and is fatal. Accordingly, substantial costs used to be required for the production, storage and transportation.

It is also known that the shutter is prepared by injection molding of a plastic material (US Patent 4,698,714). However, since the shutter is usually made of an extremely thin sheet, it is very much likely to be influenced by the internal strain formed by the injection molding and is likely to deform or deflect. In addition to the requirements for the material being thin, smooth sliding is required for the shutter, and a high precision injection molding mold is required to avoid formation of flashes. The useful life of the mold is rather short for the maintenance of the precision. Further, it is extremely difficult to precisely form projections for engagement or hooks for spring on the inner surface of the shutter by injection molding. Besides, such projections or hooks are formed inside of the shutter, and it is rather difficult to detect defects thereof after the injection.

The present invention has been accomplished to solve such conventional problems and provides a process for producing a shutter for a disc cassette, which comprises folding a plastic sheet cut to have a predetermined shape and having a softening temperature of at least 50° C, into a shape of the shutter, and heating the folded portion of the plastic sheet by ultrasonic vibration at a temperature of at least the softening temperature, followed by cooling.

Now, the specific embodiment for the process for producing a shutter will be described with reference to Figures 7 to 11.

A magnetic disc 61 is accomodated in a plastic shell 62 made of e.g. ABS resin. The shell 62 is provided with an opening 63 for inserting a magnetic head of a recording and reproduction apparatus. A shutter 64 is slidably attached to the shell for opening and closing the magentic head access opening 63.

As shown in Figures 7 and 8, the shutter 64 is a plastic sheet 41 having a thickness of from 0.2 to 0.35 mm and folded to have a ⊃ shaped cross section. As a material for the shutter 46, a hard sheet of e.g. polyvinyl chloride, polycarbonate or polyethyleneterephthalate having a softening temperature of at least 50° C is used.

If the softening temperature is lower than 50° C, there will be a problem of deformation due to the temperature of usual storage and transportation. Here, the softening temperature is the one defined in JIS (Japanese Industrial Standard) K 6745.

Numeral 42 designates an opening for inserting the magnetic head, 43 refers to a projection to engage a groove 65 provided on a plastic shell 62. The projection 43 is guided along the groove 65 so that the shutter 64 is slidably movable.

Numeral 44 is a hook for a spring 66 for opening and closing the shutter 64.

For producing the shutter for the disc cassette, a cut sheet 41 having a predetermined shape as shown in Figure 9 is folded by a female die 7 and a male die 8, whereupon the ultrasonic vibration is given to the male die 8 served as an ultrasonic horn so that the folded portion 46 is heat-treated by the frictional heat thereby generated.

By the ultrasonic vibration, the folded portion is quickly heated, and when the ultrasonic vibration was stopped, the folded portion is quickly cooled by the dies. Accordingly, the folding can be accurately done with no substantail heat deformation of the dies since the dies themselves are not heated to a high temperature.

Further, when a folding groove is preliminarily formed along a line to be folded, the plastic sheet can be accurately folded along the folding groove. The folding can be performed preferably in a cold state atmosphere so that no influence of heat will be applied to any other portion. However, the folding can be done under heating, as the case requires.

Otherwise, a continuous sheet 41 having openings preliminarily punched out, may be folded first and then punched out in a predetermined shape of a shutter. It is convenient to form the projections 43 and 44 after being heat-treated.

For example, when the polyvinyl chloride hard sheet having a thickness of 0.29 mm and a softening temperture of 79° C was used as a plastic sheet, the shutter for the disc cassette was obtained with the vibration amplitude of the male die 8 as the ultrasonic horn in a range of from 5 to 30 $\mu$, at a frequency of from 20 to 40 KHz for an operation time of from 0.2 to 0.7 seconds and under a pressing pressure of from 0.5 to 2 kg/mm². The shutter thus obtained was without deformation or deterioration of the folded portion 46 by heating test at a temperature of 51.5°C for 72 hours.

Since the shutter for the disc cassette according to the present invention has the above described construction, excessive engagement between the shutter and the plastic shell can be avoided. Thus, the conventional problem that the plastic powder resulting from the scraping enters into the interior of the disc cassette through the magnetic head access opening can be avoided. High reliability is ensured by thus preventing errors in the data recorded on the magnetic disc and damages the magnetic disc itself due to the powder. Since the shutter of the present invention is made of the plastic sheet having a softening temperatue of at least 50°C and heat-treated at the folded portion, it is superior in heat-resistance. Moreover, it has good resiliency and light in weight because it is made of plastics. Thus, the permanent deformation is hardly imparted even when once deformed. It is effective for weight reduction.

## Claims

1. A method for folding a plastic sheet, which comprises folding a plastic sheet and heat-treating the folded portion of the plastic sheet by heating the folded portion by ultrasonic vibration, followed by cooling.

2. The method according to Claim 1, wherein a folding groove is preliminarily provided on the plastic sheet along a line to be folded, the plastic sheet is folded along the folding groove, and the folded portion of the plastic sheet is heated at a temperature of at least the softening point of the plastic sheet for 0.05 to 3 seconds.

3. A process for producing a shutter for a disc cassette, which comprises folding a plastic sheet cut to have a predetermined shape and having a softening temperature of at least 50°C, into a shape of the shutter, and heating the folded portion of the plastic sheet by ultrasonic vibration at a temperature of at least the softening temperature, followed by cooling.

# FIGURE 1

# FIGURE 2

# FIGURE 3

# FIGURE 4

# FIGURE 5

# FIGURE 6

FIGURE 7

FIGURE 8

FIGURE 9

FIGURE 10

# FIGURE 11